# EUROPÄISCHE PATENTSCHRIFT

(11) **EP 1 257 402 B1**
(45) Veröffentlichungstag und Bekanntmachung des Hinweises auf die Patenterteilung: **06.10.2004**
(21) Anmeldenummer: 01925355.8
(22) Anmeldetag: 22.02.2001
(51) Int. Cl.: B29C 44/04

(54) **VERFAHREN ZUR HERSTELLUNG EINES KUNSTSTOFF-VERBUNDELEMENTS, UND KUNSTSTOFF-VERBUNDELEMENT**
METHOD FOR PRODUCING A PLASTIC COMPOSITE ELEMENT, AND PLASTIC COMPOSITE ELEMENT
PROCEDE DE PRODUCTION D'UN ELEMENT COMPOSITE EN MATIERE PLASTIQUE, ET ELEMENT COMPOSITE EN MATIERE PLASTIQUE

(30) Priorität: 24.02.2000 DE 10008775
(43) Veröffentlichungstag der Anmeldung: 20.11.2002
(73) Patentinhaber: Lear Corporation, Southfield, MI 48034 (US)
(72) Erfinder: FUSSEDER, Josef, 84155 Bodenkirchen (DE)
(74) Vertreter: Grünecker, Kinkeldey, Stockmair & Schwanhäusser Anwaltssozietät
(86) Internationale Anmeldenummer: PCT/EP2001/001994
(87) Internationale Veröffentlichungsnummer: WO 2001/062465

(56) Entgegenhaltungen:
- DE-A- 3 924 254
- GB-A- 2 306 910

## Beschreibung

Die Erfindung betrifft ein Verfahren zur Herstellung eines Kunststoff-Verbundelements, insbesondere eines Innenverkleidungselements für ein Kraftfahrzeug, bei dem eine Außenhülle mit einem Kunststoff unterfüttert wird, sowie ein solches Kunststoff-Verbundelement.

Es sind Verfahren zur Herstellung eines Kunststoff-Verbundelements bekannt, bei denen eine Außenhülle mit einem schäumbaren Kunststoff unterfüttert wird. Bei Verwendung eines entsprechend harten Schaums kann gleichzeitig mit dem Unterfüttern ein weiterer Bereich, beispielsweise einer Innenverkleidung für eine Kraftfahrzeugtür, ausgeformt werden und mit der Außenhülle verbunden werden. An dem Hartschaum können weitere Dekorelemente oder beispielsweise Lautsprecher einer Audioanlage angebracht werden. Die in diesem Zusammenhang erforderliche Härte des Hartschaumes steht allerdings der Befriedigung von höheren Komfortansprüchen und/oder von Sicherheitsanforderungen entgegen, die mindestens in bestimmten Bereichen des Verbundelements eine sich weich anfühlende und/oder nachgiebige Beschaffenheit erforderlich machen.

Die US 5,851,457 zeigt ein Verfahren gemäß dem Oberbegriff des Anspruchs 1 zum Herstellen eines Sitzpolsters. Dabei wird eine Schicht der Abdeckeinheit unter Vakuumbeaufschlagung in eine Unterform eingedrückt und deren Rückseite anschließend mit einem Kunststoff unter Bildung eines Schaumkerns ausgeschäumt. Das spezifische Gewicht des Schaumkerns beträgt 40 bis 60 kg/m³, entsprechend 0,04 bis 0,06 g/cm³.
Die schichtförmige Abdeckeinheit besteht aus dem Polsterbezug, einer atmungsaktiven Schaummatte, einer luftundurchlässigen Barriereschicht und einer isolierenden Grundierungsschicht.

Der Erfindung liegt das Problem zugrunde, ein Verfahren zur Herstellung eines Kunststoff-Verbundelements und ein entsprechendes Kunststoff-Verbundelement bereitzustellen, das die Nachteile des Standes der Technik überwindet, insbesondere mit dem ein Kunststoff-Verbundelement kostengünstig herstellbar ist, das alle Komfort- und/oder Sicherheitsanforderungen erfüllt.

Wünschenswert wäre insbesondere in bestimmten Bereichen der Innenverkleidung eines Kraftfahrzeugs eine Sandwichstruktur aus Außenhülle/Weichschaum/Hartschaum. Beim Ausschäumen des Hartschaumes in der Schäumform kommt es aber zu derart hohen Druckspannungen im Hartschaum, dass es zu einer Verformung des Weichschaumes und bei einer Entnahme des Verbundelements aus der Form zu einer Verformung der Außenhülle und damit der Kontur, der Zeichnung, des Reliefs und/oder des Dekors der Außenhülle kommt. Durch die Erfindung soll daher insbesondere eine Sandwichstruktur aus Außenhülle/Weichschaum/Hartschaum ohne eine die Funktion und/oder Ästhetik des Verbundelements beeinträchtigende Verformung der Außenhülle realisierbar sein.

Das Problem ist durch das in den unabhängigen Patentansprüchen bestimmte Verfahren bzw. Verbundelement gelöst. Besondere Ausführungsarten der Erfindung sind in den Unteransprüchen bestimmt.

Das Problem ist gelöst durch ein Verfahren zur Herstellung eines Kunststoff-Verbundelements, insbesondere eines Innenverkleidungselements für ein Kraftfahrzeug, bei dem eine Außenhülle mindestens bereichsweise mit einem Weichschaum unterfüttert wird, der anschließend unter Zwischenlage eines Trennmittels mit einem Hartschaum unterfüttert wird, wobei als Trennmittel ein vorfertigbares Formteil verwendet wird, das aufgrund der mechanischen Eigenschaften seines Werkstoffes und/oder seiner Formgebung ein Eindringen des Hartschaums in den Weichschaum und/oder eine Verformung der Außenhülle verhindert.

Die Verwendung des Begriffs Weichschaum ist als Abgrenzung gegenüber dem außerdem aufbringbaren Hartschaum zu verstehen, und soll zum Ausdruck bringen, dass der Weichschaum weicher ist als der Hartschaum. Daher umfasst der Weichschaum nach Anspruch 1 auch so genannte halbharte Schäume, beispielsweise Polyurethan-Schäume mit einerm spezifischen Gewicht von beispielsweise 0,11 bis 0,18 g/cm3. Die Härte des Weichschaumes ist durch das Mischverhältnis der in der Regel zwei Komponenten einstellbar und an die Komfort- und/oder Sicherheitsanforderungen des jeweiligen Anwendungsgebietes anpassbar, insbesondere unter Berücksichtigung der Form des Verbundelements, der Dicke des Weichschaums und/oder der Dicke und Härte des Hartschaums.

Die Außenhülle kann aus einem Kunststoff bestehen, beispielsweise aus einem tiefgezogenen Polyvinylchlorid (PVC), und an der sichtbaren Oberfläche ein Relief und/oder ein Dekor aufweisen. Typische Reliefe sind beispielsweise narbige Ledernachbildungen. Die Außenhülle kann ein dementsprechendes vorfertigbares Formteil sein.

Das Trennmittel zwischen Weich- und Hartschaum kann vorzugsweise durch Tiefziehen hergestellt werden, wobei aus Kostengründen insbesondere Kunststoff-Tiefziehteile in Frage kommen, beispielsweise aus Acrylbutadienstyrol (ABS), Polyvinylchlorid (PVC) oder Polystyrol (PS). Die Ausgangsdicke des Trennmittel-Formteils beträgt in Abhängigkeit von dem verwendeten Werkstoff und der Formgebung beispielsweise zwischen 0,1 und 0,7 mm. Eine bevorzugte Dicke beispielsweise für ABS und eine übliche Formgebung beträgt 0,3 mm. Das Trennmittel verhindert eine die Ästhetik, Haptik, Form und/oder Sicherheit beeinträchtigende Veränderung des Weichschaums und/oder der Außenhülle bzw. des Verbundelements aufgrund der beim Hinterschäumen mit Hartschaum auftretenden und beim Entnehmen des Verbundelements aus der Form gegebenenfalls sichtbar werdenden Druckspannungen.

Zum Unterfüttern wird die Außenhülle in eine entsprechend ausgebildete Unterform eingelegt und anschließend die den Weichschaum bildende Weichschaummasse auf die Rückseite der Außenhülle aufgetragen. Je nach Temperatur der Weichschaummasse, der Form und der Umgebung dauert es einige Zeit, in der Regel einige Sekunden, bis ein Aufschäumen und damit eine Volumenvergrößerung der Weichschaummasse eintritt. Vor oder während des Aufschäumens der Weichschaummasse wird das Formteil in Kontakt mit der Weichschaummasse gebracht. Hierzu wird es vorzugsweise auf eine entsprechend ausgebildete Oberform aufgesetzt und beispielsweise durch rückseitige Vakuumbeaufschlagung, Rastung oder Klemmung in der Oberform gehalten.

Beim Kontaktieren des Formteils mit der Weichschaummasse wird das Formteil vorzugsweise in dessen Randbereich in Anlage an die Außenhülle gebracht und beispielsweise durch austretende Weichschaummasse mit dieser derart verbunden, dass ein Eindringen von Hartschaum beim anschließenden Unterfüttern mit Hartschaum verhindert ist. Vorzugsweise ist das Formteil so geformt, dass sich in dessen Randbereich eine flächige oder linienförmige Anlage oder ein Formschluss mit der Außenhülle ergibt.

Die Kosten für das erfindungsgemäße Kunststoff-Verbundelement können weiter reduziert werden, wenn auch die Außenhülle ein vorfertigbares Tiefziehteil ist. Dadurch können auf einfache und reproduzierbare Weise nahezu beliebige Reliefs oder Dekors realisiert werden, die das Ausschäumen mit Hartschaum unbeschadet überstehen.

Weitere Vorteile, Merkmale und Einzelheiten der Erfindung ergeben sich aus den Unteransprüchen sowie der nachfolgenden Beschreibung, in der unter Bezugnahme auf die Zeichnungen ein Ausführungsbeispiel im einzelnen beschrieben ist. Dabei können die in den Ansprüchen und in der Beschreibung erwähnten Merkmale jeweils einzeln für sich oder in beliebiger Kombination erfindungswesentlich sein.
- Fig. 1: zeigt einen Ausschnitt aus der erfindungsgemäßen Herstellung eines Kunststoff-Verbundelements und
- Fig. 2: zeigt einen Querschnitt durch ein erfindungsgemäßes Kunststoff-Verbundelement.

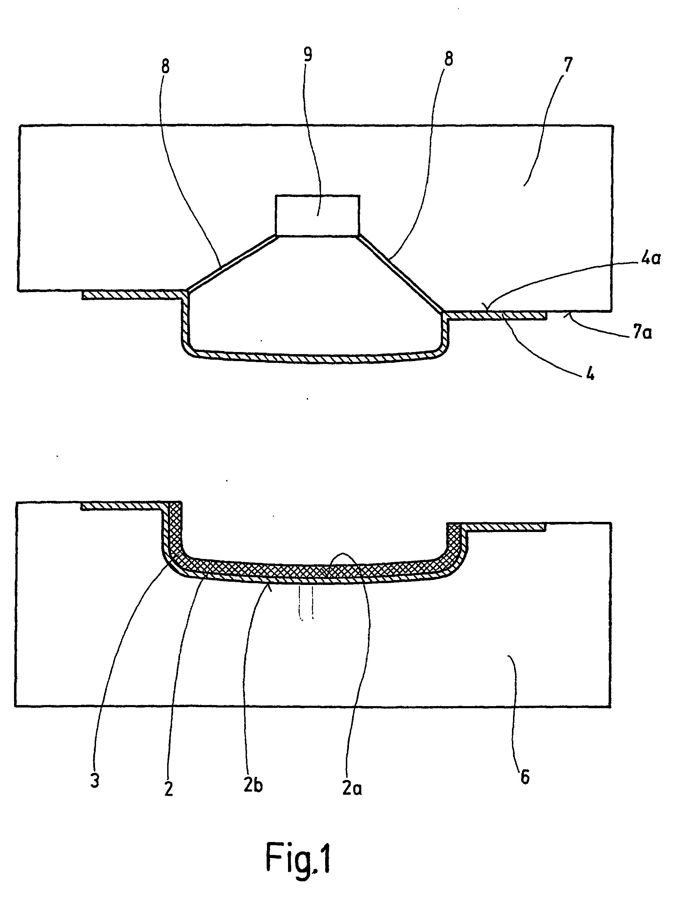

Die Fig. 1 zeigt einen Ausschnitt aus der erfindungsgemäßen Herstellung eines Kunststoff-Verbundelements 1, nämlich das Unterfüttern der Außenhülle 2 mit einem Weichschaum 3 und das Aufbringen eines Formteils 4 als Trennmittel zwischen dem Weichschaum 3 und dem anschließend aufzubringenden Hartschaum 5. Hierzu wird auf die Rückseite 2a der in eine Unterform 6 eingelegten Außenhülle 2, die zuvor als Tiefziehteil aus PVC hergestellt wurde, möglicherweise unter Verwendung der dargestellten Unterform 6, und die an ihrer Oberfläche 2b ein Dekor und/oder ein Relief aufweist, eine vorgebbare Menge der Weichschaummasse aufgebracht, die nach dem Aufschäumen einen PU-Halbhartschaum mit einem spezifischen Gewicht zwischen 0,11 und 0,18 g/cm3 ergibt.

Anschließend werden die Oberform 7 mit dem aufgesetzten Formteil 4, das durch Tiefziehen aus einem ABS-Kunststoff mit einer an die geforderten mechanischen Eigenschaften angepassten Ausgangsdicke hergestellt wurde, und die Unterform 6 zusammengeführt und zwar solange der Weichschaum 3 aufschäumt bzw. noch verformbar ist. Bei einer Temperatur der Unter- und Oberform 6, 7 von beispielsweise etwa 45 °C und einer geeigneten Weichschaummasse beginnt das Aufschäumen und damit die Volumenvergrößerung der Weichschaummasse nach etwa 10 bis 12 Sekunden nach dem Aufbringen auf die Außenhülle 2. Unter- und Oberform 6, 7 bleiben bis zum vollständigen Aushärten des Weichschaums 3 verschlossen. Nach Öffnen der Form wird in einem weiteren Verfahrensschritt der Außenhülle 2/Weichschaum 3/Formteil 4-Verbund mit einem Hartschaum 5 unterfüttert.

Das Formteil 4 wird im dargestellten Ausführungsbeispiel durch rückseitige Vakuumbeaufschlagung an der Oberform 7 festgelegt, die hierzu Verbindungskanäle 8 zwischen einer Vakuumkammer 9, die mit einer (nicht dargestellten) Vakuumpumpe in Wirkverbindung bringbar und erforderlichenfalls belüftbar ist, und der auf die Rückseite 4a des Formteils 4 gerichteten Formfläche 7a der Oberform 7 aufweist. Alternativ oder ergänzend hierzu kann das Formteil 4 auch durch Klemmen oder Einrasten an der Oberform 7 festgelegt werden.

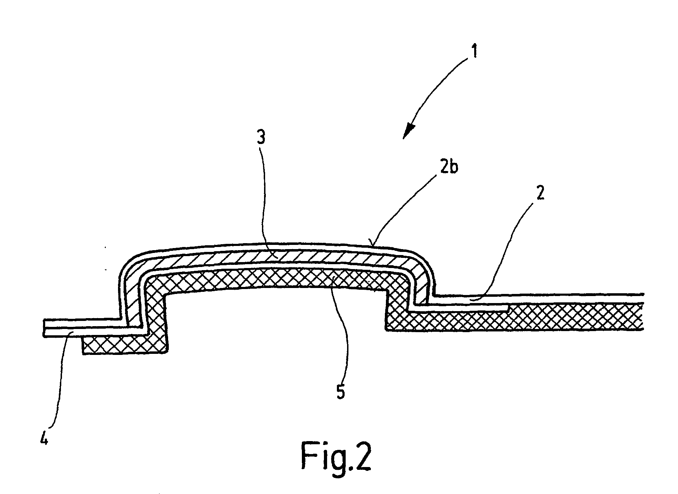

Die Fig. 2 zeigt ein erfindungsgemäßes Kunststoff-Verbundelement 1 im Querschnitt. Es handelt sich dabei insbesondere um ein Element einer Türinnenverkleidung für ein Kraftfahrzeug. Die Außenhülle 2 ist durch Tiefziehen vorgefertigt. Sie weist an ihrer zum Innenraum des Kraftfahrzeuges gerichteten Oberfläche 2b eine lederähnliche Zeichnung bzw. Narbung auf. In einem eine Brüstung des Türfensters bildenden Bereich der Türinnenverkleidung ist die Außenhülle mit dem Weichschaum 3 unterfüttert. Die Härte des Weichschaums 3 und die Dicke der Weichschaumschicht sind in an den jeweiligen Anwendungsfall, insbesondere an die Komfort- und/oder Sicherheitsanforderungen, angepasst.

Unter Zwischenlage des ebenfalls durch Tiefziehen vorgefertigten Formteils 4, das aus einem ABS-Kunststoff der Ausgangsdicke 0,3 mm besteht, ist der Weichschaum 3 mit dem Hartschaum 5 unterfüttert. Das Formteil 4 ist an seinen Randbereichen in flächiger Anlage an der Außenhülle 2 und durch den Weichschaum 3 mit dieser verbunden, so dass ein Eindringen des Hartschaumes 5 in den Bereich des Weichschaumes 3 zwischen Außenhülle 2 und Formteil 4 zuverlässig verhindert ist. Der Hartschaum 5 kann außerhalb des Formteils 4 und insbesondere in einem Bereich, in dem die Komfort- und/oder Sicherheitsanforderungen keinen Weichschaum 3 bedingen, unmittelbar in Anlage an die Außenhülle 2 kommen und diese unmittelbar unterfüttern.

## Patentansprüche

1. Verfahren zur Herstellung eines Kunststoff-Verbundelements (1), insbesondere eines Innenverkleidungselements für ein Kraftfahrzeug, bei dem eine Außenhülle (2) mindestens bereichsweise mit einem Weichschaum (3) unterfüttert wird, der Weichschaum (3) anschließend unter Zwischenlage eines Trennmittels mit einem Hartschaum (5) unterfüttert wird, und als Trennmittel ein vorfertigbares Formteil (4) verwendet wird, das aufgrund der mechanischen Eigenschaften seines Werkstoffes und/oder seiner Formgebung ein Eindringen des Hartschaums (5) in den Weichschaum (3) und/oder eine Verformung der Außenhülle (2) verhindert.

2. Verfahren nach Anspruch 1, **dadurch gekennzeichnet, dass** das Formteil (4) durch Tiefziehen hergestellt wird.

3. Verfahren nach Anspruch 2, **dadurch gekennzeichnet, dass** das Formteil (4) aus einem Kunststoff, beispielsweise Acrylbutadienstyrol, Polyvinylchlorid oder Polystyrol, mit einer Ausgangsdicke von 0,1 bis 0,7 mm, vorzugsweise 0,25 bis 0,4 mm, hergestellt wird.

4. Verfahren nach einem der Ansprüche 1 bis 3, **dadurch gekennzeichnet, dass** beim Unterfüttern der Außenhülle (2) eine den Weichschaum (3) bildende Weichschaummasse auf eine Rückseite (2a) der in eine Unterform (6) eingelegten Außenhülle (2) aufgetragen wird und anschließend vor oder während dem Ausschäumen der Weichschaummasse das auf eine Oberform (7) aufgesetzte Formteil (4) in Kontakt mit der Weichschaummasse gebracht wird.

5. Verfahren nach einem der Ansprüche 1 bis 4, **dadurch gekennzeichnet, dass** das Formteil (4), vorzugsweise in dessen Randbereich, in Anlage an die Außenhülle (2) gebracht wird und mit dieser verbunden wird.

6. Verfahren nach einem der Ansprüche 1 bis 5, **dadurch gekennzeichnet, dass** der Weichschaum (3) ein PolyurethanSchaum ist mit einem spezifischen Gewicht zwischen 0,11 bis 0,18 g/cm3.

7. Kunststoff-Verbundelement (1), insbesondere Innenverkleidungselement für ein Kraftfahrzeug, bei dem eine Außenhülle (2) mindestens bereichsweise mit einem Weichschaum (3) unterfüttert ist, der Weichschaum (3) unter Zwischenlage eines Trennmittels mit einem Hartschaum (5) unterfüttert ist, das Trennmittel ein vorfertigbares Formteil (4) ist, das aufgrund der mechanischen Eigenschaften seines Werkstoffes und/oder seiner Formgebung ein Eindringen des Hartschaums in den Weichschaum und/oder eine Verformung der Außenhülle (2) durch den Hartschaum (5) verhindert.

8. Kunststoff-Verbundelement (1) nach Anspruch 7, **dadurch gekennzeichnet, dass** die Außenhülle (2) ein vorfertigbares Tiefziehteil ist.

9. Kunststoff-Verbundelement (1) nach Anspruch 7 oder 8, **dadurch gekennzeichnet, dass** die Außenhülle (2) aus Kunststoff ist, beispielsweise aus Polyvinylchlorid.

## Claims

1. A method for producing a plastic composite element (1), in particular an interior lining element for a motor vehicle, wherein an outer covering (2) is lined at least partially with a flexible foam (3), said flexible foam (3) is subsequently lined with a rigid foam (5), with a separating means being placed thereinbetween, and a shaped part (4) which can be prefabricated is used as said separating means which by virtue of the mechanical properties of its material and/or its shape prevents said rigid foam (5) from penetrating said flexible foam (3) and/or prevents a deformation of said outer covering (2).

2. The method according to claim 1, **characterized in that** said shaped part (4) is produced by deep drawing.

3. The method according to claim 2, **characterized in that** said shaped part (4) is made of plastics, for instance acrylic butadiene styrene, polyvinyl chloride or polystyrene with an initial thickness of 0.1 to 0.7 mm, preferably 0.25 to 0.4 mm.

4. The method according to any one of claims 1 to 3, **characterized in that** during lining of said outer covering (2), a flexible foam material forming said flexible foam (3) is applied to a back side (2a) of said outer covering (2) which is laid into a lower mold (6) and subsequently, before or during foaming of said flexible foam material, said shaped part (4) which is mounted on an upper mold (7) is brought into contact with said flexible foam material.

5. The method according to any one of claims 1 to 4, **characterized in that** said shaped part (4), preferably in the edge portion thereof, is brought into contact with said outer covering (2) and connected thereto.

6. The method according to any one of claims 1 to 5, **characterized in that** said soft flexible foam (3) is a polyurethane foam having a specific weight from 0.11 to 0.18 g/cm³.

7. A plastic composite element (1), in particular an interior lining element for a motor vehicle, wherein an outer covering (2) is lined at least partially with a flexible foam (3), said flexible foam (3) is lined with a rigid foam (5) with a separating means being placed thereinbetween, said separating means is a shaped part (4) which can be prefabricated and which by virtue of the mechanical properties of its material and/or its shape prevents said rigid foam from penetrating said flexible foam and/or prevents said outer covering (2) from being deformed by said rigid foam (5).

8. The plastic composite element (1) according to claim 7, **characterized in that** said outer covering (2) is a deep-drawn part which can be prefabricated.

9. The plastic composite element (1) according to claim 7 or 8, **characterized in that** said outer covering (2) is made of plastics, for instance of polyvinyl chloride.

## Revendications

1. Procédé pour fabriquer un élément composite en matière plastique (1), en particulier un élément de revêtement intérieur pour un véhicule automobile, selon lequel on double une enveloppe extérieure (2), au moins par zones, avec une mousse souple (3), on double ensuite la mousse souple (3) avec une mousse rigide (5) en intercalant un agent de séparation, et on utilise comme agent de séparation un élément profilé (4) apte à être préfabriqué qui, en raison des caractéristiques mécaniques de sa matière et/ou de sa forme, empêche une pénétration de la mousse rigide (5) dans la mousse souple (3) et/ou une déformation de l'enveloppe extérieure (2).

2. Procédé selon la revendication 1, **caractérisé en ce qu'**on fabrique l'élément profilé (4) par emboutissage.

3. Procédé selon la revendication 2, **caractérisé en ce qu'**on fabrique l'élément profilé (4) à partir d'une matière plastique, par exemple de l'acrylobutadiène styrène, du poly(chlorure de vinyle) ou du polystyrène, avec une épaisseur initiale de 0,1 à 0,7 mm, de préférence de 0,25 à 0,4 mm.

4. Procédé selon l'une des revendications 1 à 3, **caractérisé en ce que** lors du doublage de l'enveloppe extérieure (2), on applique une masse de mousse souple formant la mousse souple (3) sur une face arrière (2a) de l'enveloppe extérieure (2) placée dans un moule inférieur (6), puis avant ou pendant le moussage de la masse de mousse souple, on met l'élément profilé (4), posé sur un moule supérieur (7), en contact avec ladite masse de mousse souple.

5. Procédé selon l'une des revendications 1 à 4, **caractérisé en ce qu'**on applique l'élément profilé (4), de préférence dans la zone de son bord, contre l'enveloppe extérieure (2) et on le relie à celle-ci.

6. Procédé selon l'une des revendications 1 à 5, **caractérisé en ce que** la mousse souple (3) est une mousse de polyuréthanne avec un poids spécifique situé entre 0,11 et 0, 18 g/cm³.

7. Elément composite en matière plastique (1), en particulier élément de revêtement intérieur pour un véhicule automobile, dans lequel une enveloppe extérieure (2) est doublée, au moins par zones, avec une mousse souple (3), la mousse souple (3) est doublée avec une mousse rigide (5), avec un agent de séparation intercalé, et l'agent de séparation est constitué par un élément profilé (4) apte à être préfabriqué qui, en raison des caractéristiques mécaniques de sa matière et/ou de sa forme, empêche une pénétration de la mousse rigide dans la mousse souple et/ou une déformation de l'enveloppe extérieure (2) par la mousse rigide (5).

8. Elément composite en matière plastique (1) selon la revendication 7, **caractérisé en ce que** l'enveloppe extérieure (2) est un élément embouti apte à être préfabriqué.

9. Elément composite en matière plastique (1) selon la revendication 7 ou 8, **caractérisé en ce que** l'enveloppe extérieure (2) est en matière plastique, par exemple en poly(chlorure de vinyle).
